# EUROPÄISCHE PATENTSCHRIFT

(11) **EP 0 360 135 B1**
(45) Veröffentlichungstag und Bekanntmachung des Hinweises auf die Patenterteilung: **03.03.1993**
(21) Anmeldenummer: 89116890.8
(22) Anmeldetag: 12.09.1989
(51) Int. Cl.: G06F 9/46

(54) **Verfahren zur Interruptverarbeitung in einer Datentverarbeitungsanlage**
Method of handling interrupts in a data processing system
Méthode de traitement de signaux d'interruption dans un ordinateur

(30) Priorität: 12.09.1988 DE 3831048
(43) Veröffentlichungstag der Anmeldung: 28.03.1990
(73) Patentinhaber: SIEMENS AKTIENGESELLSCHAFT, 80333 München (DE)
(72) Erfinder: Friedrich, Gerd, D-8000 München 80 (DE); Edelmann, Manfred, D-8056 Neufahrn (DE); Schmidt, Clemens, Dr., D-8056 Neufahrn (DE)

(56) Entgegenhaltungen:
- EP-A- 0 024 434
- EP-A- 0 196 661
- FR-A- 2 580 096
- US-A- 4 744 048
- US-A- 4 747 040

## Beschreibung

Die Erfindung betrifft ein Verfahren zur Interruptverarbeitung in einer Datenverarbeitungsanlage, nach dem Oberbegriff des Patentanspruchs 1.

Betriebsprogramme dienen dem Zweck, hardwareorientierte Komponenten einer Datenverarbeitungsanlage, beispielsweise Datenprozessor, Speicher-Ein-/Ausgabegeräte, Datenübertragungseinrichtungen, u.ä., zu steuern und deren Funktionen für anwendungsspezifische Programme bereitzustellen. Der Anwender wird so in die Lage versetzt, in seinem Programm diese Funktionen durch einfache, standardisierte Befehle aufzurufen, die vom Betriebsprogramm in entsprechende, teilweise sehr komplexe, maschinenorientierte Programmabläufe umgesetzt werden. Wenn beispielsweise eine Datei von einem Plattenspeicher in den Hauptspeicher eines Datenprozessors zu laden ist, muß der Anwender lediglich den logischen Namen der Datei zusammen mit einem Transferbefehl angeben. Die spezifische Umsetzung dieses Namens in die physikalische Adresse des Speichers sowie die Ausführung des Befehls durch Bereitstellung der Ein-/Ausgabekanäle, die Überwachung der Daten auf fehlerfreie Datenübertragung, die Datensicherung, die Berechnung der Speicheradressen u.ä. übernimmt das Betriebsprogramm. Die Effizienz einer Datenverarbeitungsanlage wird dadurch wesentlich vom Aufbau und der Funktion eines Betriebsprogramms bestimmt.

Bekannte Betriebsprogramme verfügen über ein Time-Sharing-Betriebssystem, bei dem die Rechenzeit des Datenprozessors in Zeitscheiben aufgeteilt und mehreren Benutzern zugeordnet wird. Obwohl der Datenprozessor die Benutzer in Wirklichkeit nacheinander bedient, bewirkt die hohe Rechengeschwindigkeit des Datenprozessors im Ergebnis, daß mehrere Anwender die Datenverarbeitungsanlage parallel und nahezu gleichzeitig benutzen können. Ein solches Betriebssystem eignet sich deshalb insbesondere für Aufgaben der allgemeinen Datenverarbeitung, bei denen im Verhältnis zur Rechengeschwindigkeit langsame Vorgänge bearbeitet werden. Zu solchen Aufgaben gehören z.B. die Textverarbeitung, die Datenbankauskunft, die Datenbankverwaltung, das Sortieren von Daten sowie ähnlich geartete Anwendungen.

Zur Bewältigung seiner Aufgaben greift das Time-Sharing-Betriebssystem auf verschiedene Hardwarekomponenten zu. Die Steuerung dieser Komponenten erfordert die Auswertung von Ereignissen wie beispielsweise Start und Ende eines Vorgangs, Auftreten eines Fehlers, etc., die häufig zeitkritisch sind. Die zeitoptimale Auswertung solcher Ereignisse erfolgt deshalb nicht nach dem verhältnismäßig langsamen Time-Sharing-Verfahren, sondern durch eine Interruptverarbeitung, bei der das gerade laufende Programm durch ein Ereignis, das physikalisch durch ein Interruptsignal abgebildet wird, unterbrochen wird. Nach Abarbeiten einer Interruptroutine, bei der das Unterbrechungsereignis ausgewertet und gegebenfalls auf dieses sofort reagiert wird, wird das im Time-Sharing-Betrieb laufende unterbrochene Programm fortgesetzt. Um die Rückkehr in dieses Programm zu ermöglichen, wird vor der Programmunterbrechung (Interrupt) der Programmzustand festgehalten, was durch Abspeichern relevanter Programmparameter geschieht.

Time-Sharing-Betriebssysteme haben sich in zahlreichen Anwendungsfällen bewährt und sind deshalb weit verbreitet. Die Benutzer sind daran interessiert, daß solche Betriebssysteme eine einheitliche Struktur haben, um unabhängig von einem Datenprozessor und der weiteren Hardwarestruktur der Datenverarbeitungsanlage die einmal entwickelten Anwenderprogramme auf verschiedenen Datenverarbeitungsanlagen abarbeiten zu können. Demgemäß haben die Software-Hersteller die Betriebssysteme standardisiert und garantieren die Kompatibilität der mit diesen Betriebssystemen laufenden Anwenderprogrammen auf verschiedenen Datenverarbeitungsanlagen. Ein Eingriff in das Betriebssystem würde diese Kompatibilität aufheben. Ein solches standardisiertes Time-Sharing-Betriebssystem ist z.B. das UNIX-Betriebssystem der Firma AT & T.

Neben den vorstehend genannten Einsatzmöglichkeiten werden Datenverarbeitungsanlagen auch zum Steuern technischer Prozesse eingesetzt, wobei sie direkt in den technischen Verfahrensablauf mit eingebunden und damit Teil der Prozeßsteuerung werden. Beispiele dafür sind die schnelle Meßdatenverarbeitung zur Steuerung von Meßsystemen, die Signalverarbeitung und Vermittlung von Teilnehmerverbindungen bei Telekommunikationsanlagen, die Steuerung chemischer Prozesse, die Anwendung in der Produktionstechnik für CIM (Computer Integrated Manufacturing), die Robotersteuerung (Robotic) sowie ähnlich geartete Industrieanwendungen. Die Verknüpfung der anwendungsspezifischen Programme mit dem Datenprozessor erfordert hier ein Betriebssystem, das im Realzeitbetrieb kurze Reaktionszeiten auf äußere Prozeßereignisse hat. Ein Beispiel für ein solches Betriebssystem ist das NICOS-Betriebssystem der Firma Nixdorf Computer AG. Zu den Aufgaben der Prozeßsteuerung gehören häufig auch die Verwaltung von Prozeßdaten, die Erneuerung von Datenbeständen, der Zugriff auf Datenbankinformationen u.ä. für die sich ein standardisiertes Time-Sharing-Betriebssystem besonders gut eignet. Dieses Betriebssystem versagt jedoch bei der Bewältigung zeitkritischer Aufgaben der Prozeßsteuerung.

Deshalb wurde in speziellen Anwendungsfällen ein standardisiertes Time-Sharing-Betriebssystem durch Hinzufügen von Realzeitprogrammteilen so verändert, daß auch ein speziell auf die Anwendung zugeschnittener Realzeitbetrieb zum Steuern des technischen Prozesses möglich wurde. Die Originalität des standardisierten Time-Sharing-Betriebssystems und damit auch die Kompatibilität geht damit aber verloren.

Bei größeren Daterverarbeitungsanlagen wird die Forderung, gleichermaßen einen technischen Prozeß zu steuern und Aufgaben der allgemeinen Datenverarbeitung zu bewältigen, dadurch gelöst, daß zwei Datenprozessoren verwendet werden, deren einer mit einem Time-Sharing-Betriebssystem und deren anderer mit einem Realzeitbetriebssystem ausgestattet ist, wobei eine entsprechende Aufteilung der Aufgaben erfolgt. Diese Lösung ist aber für Kleinanlagen aus wirtschaftlichen Gründen nicht tragbar.

Es ist daher Aufgabe der Erfindung, eine wirtschaftlich günstigere Realisierung der wahlweisen Steuerung technischer Prozesse und der allgemeinen Datenverarbeitung anzugeben.

Diese Aufgabe wird für ein Verfahren eingangs genannter Art dadurch gelöst, daß jeder Interrupt zentral erfaßt, hinsichtlich seiner Zugehörigkeit zu einem der beiden Betriebssysteme untersucht und in diesem Betriebssystem verarbeitet wird, und daß das Realzeitbetriebssystem bei Auftreten eines Realzeit-Interrupts auch bei aktivem Time-Sharing-Betriebssystem aktiviert wird, wozu das Time-Sharing-Betriebssystem unterbrochen wird.

Das Verfahren nach der Erfindung umfaßt zwei Betriebssysteme, ein Time-Sharing-Betriebssystem und ein Realzeitbetriebssystem, die zusammen nur einen Datenprozessor benötigen. Die eine Programmunterbrechung oder einen Interrupt auslösenden Interruptsignale können sowohl durch den technischen Prozeß oder durch die allgemeine Datenverarbeitung erzeugt werden. Sie veranlassen entweder das Starten eines Realzeitprogramms durch das Realzeitbetriebssystem oder die Bereitstellung eines Anwenderprogramms, das über das Time-Sharing-Betriebssystem in dem für das Anwenderprogramm vorgesehenen Zeitabschnitt abgearbeitet wird. Da in Verbindung mit dem Datenprozessor nur ein Betriebssystem aktiv sein kann, muß jeweils eines der Betriebssysteme eingeschaltet, d.h. aktiviert sein, und das andere unterbrochen werden. Um auftretende Programmunterbrechungen für beide Betriebssysteme zu erkennen, werden sie zentral erfaßt und ihre Zugehörigkeit zu einem der beiden Betriebssysteme festgestellt. Im betreffenden Betriebssystem wird zunächst eine zum Interrupt gehörende Interrupt-Routine abgearbeitet. Diese Interrupt-Routine benötigt im allgemeinen nur eine kurze Ausführungszeit, in der beispielsweise eine Meldung erzeugt, Daten transferiert oder ein Ausgangszustand gesetzt wird. Nach Abarbeiten dieser Routine wird in das Betriebsprogramm zurückgekehrt. Damit ist sichergestellt, daß jeder Interrupt dem zugehörigen Betriebssystem gemeldet wird, welches die entsprechenden Programme nach dem Time-Sharing-Verfahren oder nach dem Realzeitverfahren starten kann.

Um das Erfordernis der kurzen Reaktionszeit für Interrupte aus dem technischen Prozeß zu erfüllen, wird das Realzeitbetriebssystem jeweils bei Auftreten eines Realzeit-Interrupts aktiviert. Hierzu wird ein eventuell laufendes Time-Sharing-Betriebssystem unterbrochen. Nach Abarbeiten der Realzeitprogramme als Reaktion auf den Realzeit-Interrupt kann wieder in das Time-Sharing-Betriebssystem zurückgekehrt werden. Durch das Zusammenspiel der Betriebssysteme wird das Betriebsprogramm für einen Anwender, dem die inneren Zusammenhänge des Betriebsprogramms nicht bekannt sein müssen, wie ein Realzeitbetriebssystem mit einem diesem unterlagerten Time-Sharing-Betriebssystem.

Durch die Erfindung wird also erreicht, daß eine Datenverarbeitungsanlage sowohl zum Steuern eines technischen Prozesses mit hohen Anforderungen an die Reaktionszeit als auch zur allgemeinen Datenverarbeitung genutzt werden kann. Das Time-Sharing-Betriebssystem selbst wird bei der Erfindung nicht verändert, wodurch bei Verwendung eines standardisierten Betriebssystems die volle Kompatibilität von Anwenderprogrammen erhalten bleibt. Auch in die Programmstruktur des Realzeitbetriebssystems muß nicht eingegriffen werden, d.h. es können standardisierte Realzeitbetriebssysteme verwendet werden, die einen weiten Anwendungsbereich für Prozeßsteuerungen abdecken. Insgesamt wird durch die Erfindung die Leistungsfähigkeit einer Datenverarbeitungsanlage, die mit einem Datenprozessor ausgestattet ist, wesentlich gesteigert.

Eine Weiterbildung der Erfindung ist dadurch gekennzeichnet, daß ein Realzeitbetriebssystem vorgesehen ist, dessen Realzeitprogramme abhängig von ihrer Priorität abgearbeitet werden, und daß die Priorität des Realzeitprogramms mit der Priorität eines gegebenenfalls laufenden Anwenderprogramms des Time-Sharing-Betriebssystems zentral verglichen wird.

Realzeitbetriebssysteme mit prioritätsgesteuerten Realzeitprogrammen sind an sich bekannt. Jedem Ereignis eines Prozesses wird hierbei ein seiner Wichtigkeit entsprechender Rang oder Priorität zugeordnet. Den auf die Ereignisse reagierenden Realzeitprogrammen werden korrespondierende Prioritäten zugewiesen. Löst ein Ereignis einen Interrupt aus, so wird die Priorität des zu aktivierenden Realzeitprogramms festgestellt und das entsprechende Realzeitprogramm nur dann ausgeführt, wenn die Priorität höher ist als die des gerade laufenden Programms. Ist dies nicht der Fall, so wird das Realzeitprogramm mit niedrigerer Priorität in eine Warteliste eingetragen und erst zu einem späteren Zeitpunkt abgearbeitet. Bei der erfindungsgemäßen Maßnahme wird die Priorität des Realzeitprogramms einem Vergleich unterzogen und sofort entschieden, welches Betriebssystem in Funktion treten, bzw. weiterarbeiten soll.

Analoges gilt für eine Weiterbildung, bei der ein Time-Sharing-Betriebssystem vorgesehen ist, dessen Anwenderprogramme abhängig von der Priorität eines Interrupts gestartet werden.

Eine Weiterbildung der Erfindung ist dadurch gekennzeichnet, daß bei einem Realzeitbetriebssystem bzw. einem Time-Sharing-Betriebssystem, dessen Realzeitprogramme bzw. Anwenderprogramme abhängig von einer Programmpriorität abgearbeitet werden die Priorität des jeweils laufenden Programms zentral festgestellt wird, und daß die Aktivierung des jeweiligen Betriebssystems von der Programmpriorität des jeweils laufenden Programms abhängt.

Bei dieser Weiterbildung ist vorgesehen, daß bei einem Realzeitinterrupt nur unter der Bedingung, daß die Priorität des Realzeitprogramms höher ist als die des laufenden Anwenderprogramms, das Realzeitbetriebssystem aktiviert wird. Umgekehrt ist es möglich, daß ein höher priorisierter Interrupt des Time-Sharing-Betriebssystems das Realzeitbetriebssystem unterbricht, das Time-Sharing-Betriebssystem aktiviert und ein entsprechendes Anwenderprogramm gestartet wird. Durch diese Maßnahme haben beide Betriebssysteme den gleichen Rang und werden nur abhängig von ihren Prioritäten aktiviert. Diese Weiterbildung läßt sich besonders dort vorteilhaft einsetzen, wo beide Betriebssysteme Prozesse mit kurzen Reaktionszeiten steuern sollen oder auch im Realzeitbetriebssystem Prozesse vorhanden sind, die nicht zeitkritisch sind und daher eine geringere Priorität als Anwenderprogramme haben können.

Bei einer Ausführungsform wird beim Systemlauf zunächst das Time-Sharing-Betriebssystem und anschließend das Realzeitbetriebssystem geladen. Durch diese Maßnahme wird erreicht, daß das Time-Sharing-Betriebssystem bereits betriebsfähig ist und ein Zugriff auf die durch das Time-Sharing-Betriebssystem gesteuerten Betriebsfunktionen, z.B. Plattenspeicherzugriff, möglich ist, wenn das Realzeitbetriebssystem geladen werden soll. Für den Anwender bedeutet dies eine einfache Handhabung des Systemhochlaufs, da das Realzeitbetriebssystem wie ein normales Anwenderprogramm durch einfache Softwarebefehle über das anwenderfreundliche Time-Sharing-Betriebssystem geladen werden kann.

Eine weitere Ausführungsform ist dadurch gekennzeichnet, daß bei Auftreten eines Interrupts zu einem die Aktivierung und Unterbrechung der Betriebssysteme steuernden Auswertungsprogramm verzweigt wird, auf dessen Programmadresse eine in einem Speicher abgespeicherte Interruptsprungadresse verweist. Durch diese Maßnahme wird beim Auftreten eines Interrupts für das Realzeitbetriebssystem oder für das Time-Sharing-Betriebssystem nicht direkt in das betreffende Betriebssystem verzweigt, wie dies bei bekannten Betriebsprogrammen üblich ist, sondern zunächst in ein dem Interrupt nachgeschaltetes Programm. Dieses stellt die Zugehörigkeit des Interrupts zu einem der Betriebssysteme fest und verzeigt dann abhängig von den bereits oben erläuterten Bedingungen in eines der Betriebssysteme. Die Ausführung der Arbeitsschritte in einem Programm hat den Vorteil, daß je nach Umfang der gewünschten Interruptauswertung unterschiedliche Programme erstellt werden können die in einfacher Weise über eines der Betriebssysteme geladen werden können.

Weiterhin kann vorgesehen sein, die Interruptsprungadresse über ein Adressenänderungsprogramm zu verändern. Damit ist es möglich, die Programmadresse, bei der eine Programmroutine nach Auftreten eines Interrupts gestartet wird, zu variieren. Es können somit im Datenprozessor mehrere Programmroutinen fest eingespeichert werden, die unterschiedliche Arbeitsabläufe haben und die sich durch ihre Anfangsadresse unterscheiden. Je nach Anwendungsfall kann bei Auftreten eines Interrupts zu verschiedenen Programmadressen verzweigt werden. Das Abändern einer Interruptsprungadresse muß dabei nicht unbedingt durch die Eingabe einer Absolutadresse erfolgen, sondern kann auch mit Hilfe der bekannten Adressenberechnungsarten durchgeführt werden. Damit werden u.a. die ursprünglichen Interruptsprungadressen des Time-Sharing-Betriebssystems überschrieben und damit das Verzweigen auf das Auswerteprogramm ermöglicht. Das Ändressenänderungsprogramm wird vorzugsweise beim Aktivieren des Betriebsprogramms aufgerufen und abgearbeitet.

Das Adressenänderungsprogramm wird vorzugsweise als Anwenderprogramm oder als Realzeitprogramm definiert, und ist somit entweder von einem Benutzer durch das Time-Sharing-Betriebssystem oder prozeßgesteuert durch einen Interrupt über das Realzeitbetriebssystem aufrufbar und startbar.

Eine bevorzugte Weiterbildung zeichnet sich dadurch aus, daß jedem der beiden Betriebssysteme ein anderer Bereich des Arbeitsspreichers des Datenprozessors fest zugeordnet ist. Damit wird sichergestellt, daß sich die Betriebssysteme sowie deren Programme gegenseitig nicht stören können. Das Betriebsprogramm hat damit die Wirkung, als würden zwei getrennte Datenverarbeitungsanlagen mit getrennten Speicherbereichen parallel arbeiten.

In einer weiteren Ausbildung wird ferner beiden Betriebssystemen ein gemeinsamer Speicherbereich zugeordnet. Der gemeinsame Speicherbereich dient zum Datenaustausch zwischen den beiden Betriebssystemen. Unter Einsatz entsprechender Hilfsprogramme können Daten aus dem jeweils einem Betriebssystem zugeordneten Speicherbereich in den gemeinsamen Speicherbereich transferiert und zwischengespeichert und aus dem gemeinsamen Bereich Daten gelesen werden. Der Datenverkehr wird hierbei ähnlich wie zwischen zwei getrennten Rechnersystemen durchgeführt.

Vorteilhafterweise kann die Lage und die Größe der Bereiche im Arbeitsspeicher beim Aktivieren,d.h.beim Hochlaufen des Systems verändert werden. Durch diese Variante ist es möglich, die Aufteilung des Arbeitsspeichers in die einzelnen Bereiche dem jeweiligen Anwendungsfall und dem sich daraus ergebenden Speicherbedarf der Betriebssysteme bzw. bei unterschiedlichen Ausbaustufen des Arbeitsspeichers optimal anzupassen.

Ausführungsbeispiele der Erfindung werden an Hand der Zeichnung erläutert. Darin zeigt:
- Figur 1: eine Darstellung einer Datenverarbeitungsanlage mit daran angeschlossenen Hardwarekomponenten in einer Blockdarstellung,
- Figur 2: ein Flußdiagramm eines Verfahrens nach der Erfindung,
- Figur 3: das Abarbeiten von Anwenderprogrammen und Realzeitprogrammen über der Zeit bei einem erfindungsgemäßen Verfahren,
- Figur 4: die Aufteilung des Arbeitsspeichers eines Datenprozessors in verschiedene Speicherbereiche,
- Figur 5: ein Flußdiagramm des Datentransfers zwischen den Speicherbereichen, und
- Figur 6: die Anwendung der Erfindung innerhalb einer Telekommunikationsanlage.

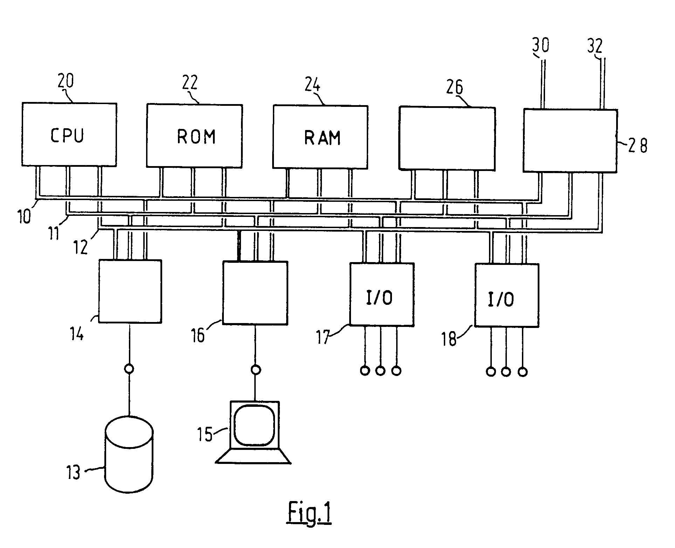

In Figur 1 ist das Blockbild einer Datenverarbeitungsanlage dargestellt, die für die Anwendung der Erfindung benutzt werden kann. Ein Datenprozessor 20, der ein handelsüblicher Mikroprozessor sein kann, ist über einen Adreßbus 10, einen Datenbus 11 und einen Steuerdatenbus 12 mit weiteren Hardwarebausteinen verbunden. Diese sind ein Zeittaktgeber 26, ein Interruptkontrollbaustein 28, ein Festwertspeicher 22, der als ROM-Speicher ausgeführt ist und u.a. eine Ladeprogramm für den Systemanlauf enthält, ein als Hauptspeicher dienender Schreib-Lese-Speicher 24 und ein Schnittstellenkontrollbaustein 14, der einen Massenspeicher 13 mit den Datenbussen 10, 11, 12 verbindet. Weitere an die Datenbusse 10, 11, 12 angeschlossene Hardwarebausteine sind eine erste Ein-/Ausgabeschnittstelle 16, die mit einem Bildschirmterminal 15 verbunden ist, eine zweite Ein-/Ausgabeschnittstelle 17, die für den Datenverkehr mit Peripheriegeräten der allgemeinen Datenverarbeitung vorgesehen ist, sowie eine dritte Ein-/Ausgabeschnittstelle 18, die sich für die Steuerung technischer Prozesse eignet.

Der Interruptkontrollbaustein 28 ist programmierbar und erfaßt über eine Interruptdatenleitung 30 prozeßabhängige Interruptsignale sowie über eine weitere Interruptdatenleitung 32 interne Interruptsignale der Datenverarbeitungsanlage. Bei Auftreten eines Interruptsignals gibt der Interruptkontrollbaustein 28 eine Meldung sowie eine Interruptsprungadresse ab, die der Datenprozessor 20 auswertet, um einen Interrupt oder eine Programmunterbrechnung zu veranlassen. Die verschiedenen Interruptsignale können dabei bereits vom Interruptkontrollbaustein 28 nach Prioritäten ausgewertet werden.

Das Betriebsprogramm mit dem Time-Sharing-Betriebssystem, dem Realzeitbetriebssystem sowie mit den von den Betriebssysteme verwalteten Anwenderprogrammen und Realzeitprogrammen ist im Massenspeicher 13 gespeichert. Beim Systemanlauf wird zunächst über das im Festwertspeicher 22 gespeicherte Ladeprogramm das Time-Sharing-Betriebssystem, das in diesem Beispiel ein UNIX-Betriebssystem der Firma AT & T ist, geladen. Es sei hier bemerkt, daß auch andere Time-Sharing-Betriebssysteme verwendet werden können. Die Datenverarbeitungsanlage arbeitet nach dem Starten des UNIX-Betriebssystems unter dessen Kontrolle. Zum Laden des Realzeitbetriebssystems sowie weiterer Programme können daher die im UNIX-Betriebssystem definierten Befehle benutzt werden. Das Realzeitbetriebssystem wird dabei als sogenanntes "special file" geladen, wobei ihm eine spezielle Ladeadresse zugewiesen wird.

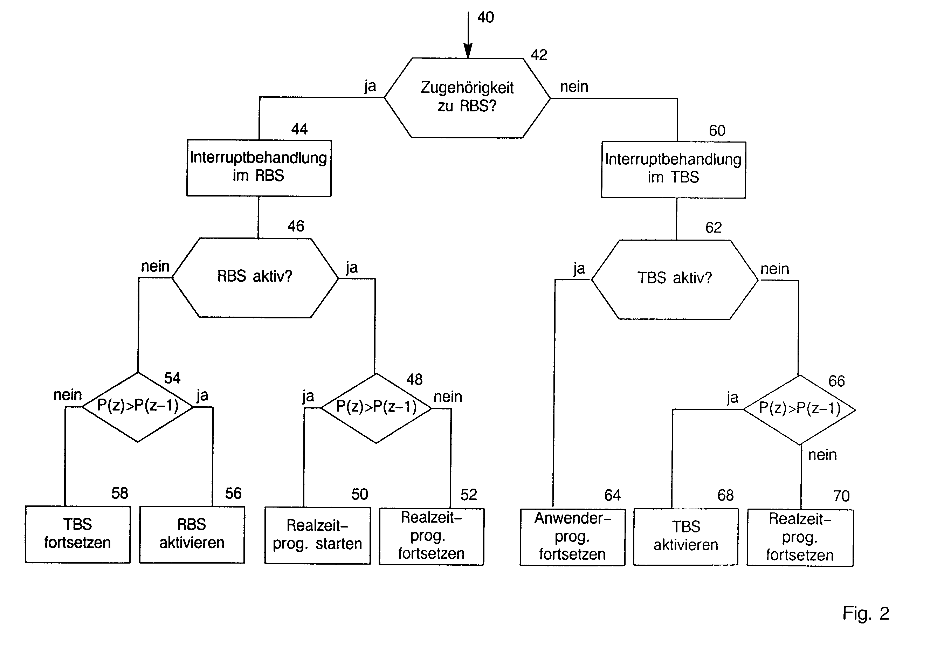

Mit dem Start des Betriebsprogramms werden die in Figur 2 als Flußdiagramm dargestellten Funktionen wirksam. Ein vom Interruptkontrollbaustein 28 gemeldeter Interrupt 40 wird im ersten Arbeitsschritt 42 auf seine Zugehörigkeit zu einem der Betriebssysteme untersucht. Zunächst sei angenommen, daß ein Realzeitinterrupt vorliegt, so daß zu den auf der linken Seite der Figur 2 dargestellten Arbeitsabschnitten verzweigt wird. Im Arbeitsschritt 44 wird zunächst eine Interruptroutine abgearbeitet, wozu ein Programmsprung in das Realzeitbetriebssystem durchgeführt wird. In der Interruptroutine wird der Interrupt registiert, werden Interruptparameter bereitgestellt und gegebenenfalls sofort erforderliche Arbeitsschritte, wie beispielsweise das Erzeugen von Quittierungssignalen u.ä., ausgeführt. Nach Durchlaufen der Interruptroutine wird zum Arbeitsschritt 46 des Betriebsprogramms zurückgekehrt und der vor dem Interrupt herrschende Zustand des Betriebsprogramms abgefragt. Wenn das Realzeitbetriebssystem aktiv war, so wird im Arbeitsschritt 48 die Priorität P (z) des im aktuellen Zustand z vorliegenden Interrupts mit der Priorität P (z-1) des unterbrochenen Programms verglichen. Ist die Priorität P (z) größer als die des vorangegangenen Zustandes P (z-1), so wird zum Arbeitsschritt 50 verzweigt, bei dem ein ranghöheres Realzeitprogramm des Realzeitbetriebssystems gestartet wird. Bei niedrigerer Priorität P (z) wird im Arbeitsschritt 52 das unterbrochene Realzeitprogramm fortgesetzt. Ein zum aktuellen Interrupt gehörendes Realzeitprogramm, in dem auf das durch den Interrupt signalisierte Prozeßereignis reagiert wird, kann dann zu einem späteren Zeitpunkt, wenn keine ranghöheren Programme vorliegen, nach einem Warteschlangenverfahren abgearbeitet werden.

Wenn im Arbeitsschritt 46 festgestellt wird, daß das Time-Sharing-Betriebssystem vor der Unterbrechung aktiv war, wird zum Arbeitsschritt 54 verzweigt. Auch hier findet zunächst ein Prioritätsvergleich zwischen der Priorität P (z) des aktuellen Interrupts mit der Programmpriorität P (z-1) des unterbrochenen Programms statt. Hat der aktuelle Interrupt die höhere Priorität, so wird im Arbeitsschritt 56 das Realzeitbetriebssystem aktiviert, welches ein Realzeitprogramm startet, und das Time-Sharing-Betriebssystem wird unterbrochen. Es sei hier erwähnt, daß bei der Unterbrechung von Programmen allgemeiner Art die bekannten Methoden der Interruptverarbeitung zum Retten des Programmzustandes des unterbrochenen Programms angewendet werden, beispielsweise durch Abspeichern von Registerinhalten und Programmadressen.

Wenn beim Arbeitsschritt 48 eine niedrigere Priorität P (z) des aktuellen Interrupts festgestellt wird, so wird im nächsten Arbeitsschritt 58 ein Programmsprung zum Time-Sharing-Betriebssystem durchgeführt, und das dort unterbrochene Programm wird fortgesetzt. Das durch den Realzeitinterrupt als Antwort auf ein Prozeßereignis angeforderte Realzeitprogramm mit niedrigerer Priorität wird, wie vorher beschrieben, erst zu einem späteren Zeitpunkt nach Abarbeiten ranghöherer Programme gestartet.

Im folgenden werden die Arbeitsschritte beschrieben, die auf den Arbeitsschritt 42 folgen, wenn als Interrupt 40 ein zum Time-Sharing-Betriebssystem gehörender Interrupt festgestellt wird. Auch hier wird zunächst im Arbeitsschritt 60 eine Interruptroutine im Time-Sharing-Betriebssystem durchlaufen, um diesem entsprechende Interruptparameter zu übermitteln. Nach Abarbeiten der Interruptroutine findet im nächsten Arbeitsschritt 62 des Betriebsprogramms abhängig vom Zustand, in dem sich das Betriebssystem vor der Unterbrechung befand, eine weitere Verzweigung statt. War vor der Unterbrechung das Time-Sharing-Betriebssystem aktiv, so wird im Arbeitsschritt 64 das unterbrochene Anwenderprogramm fortgesetzt. Ein durch den Interrupt angefordertes spezielles Anwenderprogramm wird in einem dafür vorgesehenen Zeitabschnitt nach dem Time-Sharing-Betriebsverfahren gestartet.

Wenn das Realzeitbetriebssystem aktiv war, wird im Arbeitsschritt 62 zum Vergleichsschritt 66 verzweigt, wo die Priorität P (z) des aktuellen Interrupts mit der Priorität P (z-1) des Realzeitprogramms verglichen wird. Bei höherer Priorität P (z) des aktuellen Interrupts wird im Arbeitsschritt 68 das Time-Sharing-Betriebssystem aktiviert und ein Anwenderprogramm aufgerufen und gestartet. Bei niedrigerer Priorität P (z) wird im Arbeitsschritt 70 das unterbrochene Realzeitprogramm, unterstützt durch das Realzeitbetriebssystem, fortgesetzt.

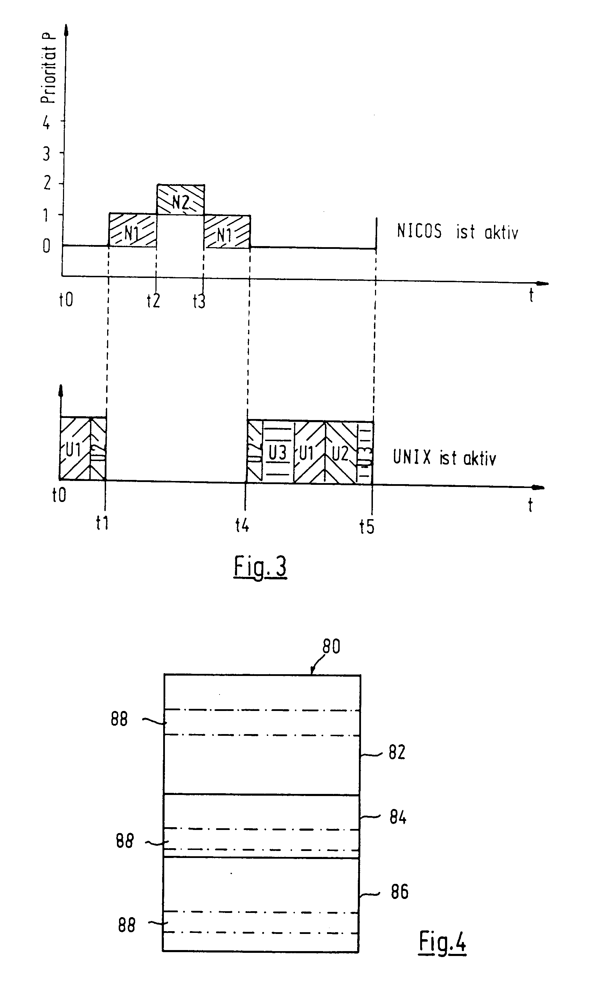

In Figur 3 ist der vom Betriebsprogramm gesteuerte Wechsel zwischen den Betriebssystemen dargestellt. In diesem Beispiel werden das Time-Sharing-Betriebssystem UNIX und das Realzeitbetriebssystem NICOS der Firma Nixdorf Computer AG verwendet. Im oberen Bildteil ist die Aktivität des Realzeitbetriebssystems NICOS, im unteren Bildteil die des Time-Sharing-Betriebssystems UNIX über die Zeit t dargestellt. Beim UNIX-Betriebssystem werden die Anwenderprogramme U1, U2, U3 mit jeweils gleicher Priorität abgearbeitet; beim NICOS-Betriebssystem hat das Realzeitprogramm N1 die Priorität 1 und das Realzeitprogramm N2 die höhere Priorität 2.

Im Zeitabschnitt von t0 bis t1 ist das UNIX-Betriebssystem aktiv, und die Anwenderprogramme U1 und U2 werden in den ihnen zugeteilten Zeitscheiben abgearbeitet. Im Zeitpunkt t1 tritt ein Realzeitinterrupt auf, der das UNIX-Betriebssystem und dmait auch das Anwenderprogramm U2 unterbricht und anschließend das NICOS-Betriebssystem aktiviert. Dieses startet als Antwort auf das den Interrupt auslösende Prozeßereignis das Realzeitprogramm N1. Während dieses abgearbeitet wird, tritt zum Zeitpunkt t2 ein weiterer Realzeitinterrupt mit höherer Priorität auf, der den Start des ranghöheren Programms N2 veranlaßt. Erst nachdem das Realzeitprogramm N2 vollständig abgearbeitet ist, wird zum Realzeitprogramm N1 zurückgekehrt und dieses beendet. Da keine weiteren Realzeitprogramme abzuarbeiten sind, wird das NICOS-Betriebssystem unterbrochen und zum UNIX-Betriebssystem gewechselt. Dort wird das zuvor unterbrochene Anwenderprogramm U2 im zeitlichen Wechsel mit den weiteren Anwenderprogrammen U1 und U3 weiterbearbeitet. Das UNIX-Betriebssystem wird erst wieder im Zeitpunkt t5 durch einen erneuten Realzeitinterrupt unterbrochen, der einen Wechsel zum NICOS-Betriebssystem einleitet.

Figur 4 zeigt die Aufstellung des Arbeitsspeichers 80 des Datenprozessors in drei Bereichen 82, 84, 86. Der Speicherbereich 82 ist hierbei dem Time-Sharing-Betriebssystem, der Speicherbereich 86 dem Realzeitbetriebssystem zugeordnet. Ein gemeinsamer Bereich 84, auf den beide Betriebssysteme zugreifen können, ist zwischen den beiden Bereichen 82, 86 und direkt an diese angrenzend angeordnet. Um Daten 88 vom Speicherbereich 82 zum Speicherbereich 86 zu transferieren, müssen die Daten 88 im gemeinsamen Speicherbereich 84 zwischengespeichert werden. Zum Datentransfer können die bekannten Verfahren der Speicherzustellung mit den Steuerinformationen "Speicher frei", "Speicher belegt" "Daten vorhanden", wie sie bei der Kommunikation zwischen getrennten Speichersystemen üblich sind, verwendet werden. Ein Datentransfer in umgekehrter Richtung, d.h. vom Speicherbereich 86 hin zum Speicherbereich 82, ist auf analoge Art und Weise möglich.

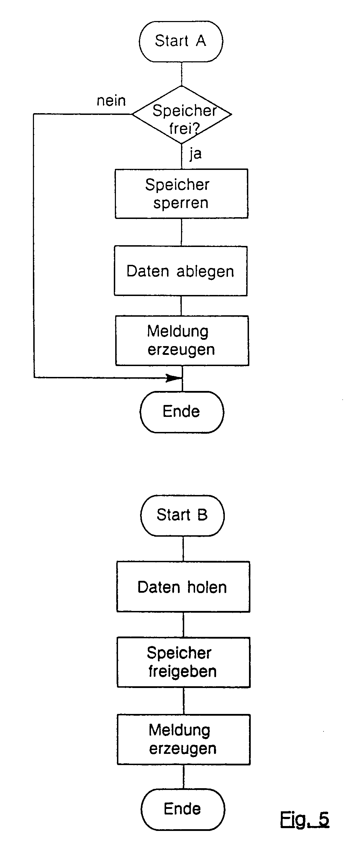

Zur Durchführung des Datentransfers zwischen den den jeweiligen Betriebssystemen zugeordneten Speicherbereichen sind Datentransferprogramme A, B vorgesehen, deren Flußdiagramme in Figur 5 dargestellt sind. Beispielhaft wird hier angenommen, daß Daten des Realzeitbetriebssystems an das Time-Sharing-Betriebssystem übermittelt werden sollen. Nach dem Starten des Datentransferprogramms A, bei dem diesem Programmparameter wie z.B. Quelladressen der Daten, Datenumfang, Zeiladresse der Daten mitgegeben werden, wird geprüft, ob ein freier Speicherabschnitt im gemeinsamen Speicherbereich der beiden Betriebssysteme vorhanden ist. Bei negativem Ergebnis dieser Prüfung wird das Datentransferprogramm A beendet und zu einem späteren Zeitpunkt für einen neuen Versuch gestartet. Bei positivem Ergebnis der Prüfung wird dieser Speicherabschnitt vor dem Zugriff anderer Programme gesperrt, die Daten im Speicherabschnitt abgelegt, mit Hilfe eines Interrupts eine Meldung über das Anlegen der Daten im Speicherabschnitt an das Time-Sharing-Betriebssystem abgegeben und das Datentransferprogramm A beendet.

Das Time-Sharing-Betriebssystem startet nach Verarbeitung des Interrupts ein Datentransferprogramm B, das die Daten aus dem gemeinsamen Datenbereich holt und im geschützten Speicherbereich des Time-Sharing-Betriebssystems ablegt. Der durch das Datentransferprogramm A gesperrte Speicherabschnitt wird danach wieder freigegeben. Abschließend wird durch einen Interrupt eine Meldung an das Realzeitbetriebssystem abgegeben, mit dem der abgeschlossene Datentransfer signalisiert wird. Entsprechende Datentransferprogramme sind auch für den Datenverkehr in umgekehrter Datenrichtung vorgesehen.

Durch den Datenaustausch zwischen den beiden Betriebssystemen können sich beide Betriebssysteme gegenseitig in ihren Aufgaben unterstützen. Beispielsweise kann das Realzeitbetriebssystem auf eine vom Time-Sharing-Betriebssystem verwaltete Datenbank zugreifen und sich mit notwendigen Prozeßinformationen versorgen; umgekehrt kann ein vom Time-Sharing-Betriebssystem verwaltetes Auskunftssystem auf aktuelle Prozeßdaten eines technischen Prozesses zugreifen, und diese einem Benutzer zur Verfügung stellen.

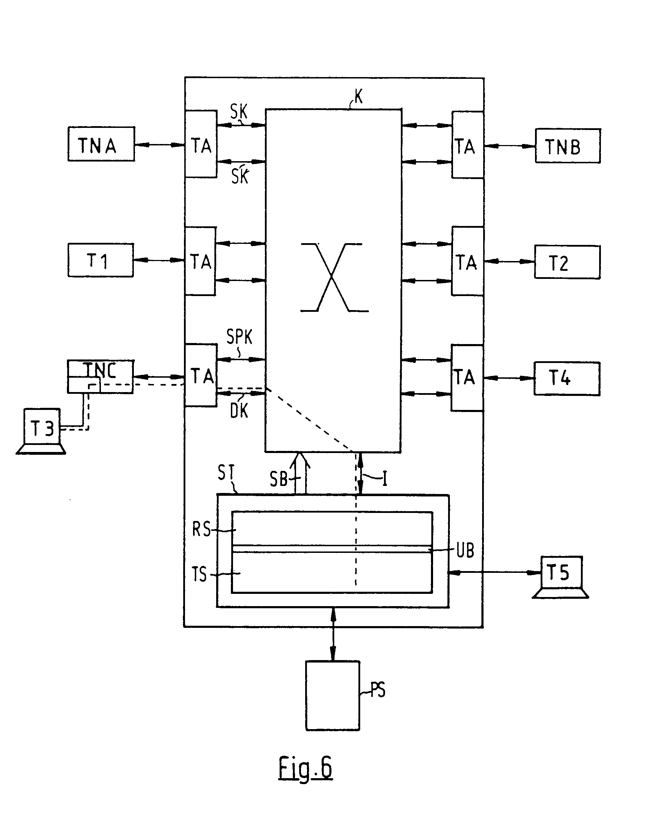

In Figur 6 ist eine Telekommunikationsanlage mit einem Koppelfeld K und gleichartigen Teilnehmeranschlußschaltungen TA dargestellt. Die Teilnehmeranschlußschaltungen TA sind jeweils über zwei Informations- und Signalisierungskanäle SK (entsprechend ISDN) mit dem Koppelfeld K verbunden. Die Teilnehmerstationen TNA, TNB sind reine Sprach-Endgeräte. Die Teilnehmerstationen T1, T2, T4 sind "Multifuntionelle Endgeräte", mit denen sowohl Sprach-, als auch Datenkommunikation möglich ist. Bei der Teilnehmerstation TNC ist ein Informationskanal für die Sprachübertragung vorgesehen, und der zweite Informationskanal dient dem Datenverkehr über einen Bildschirmarbeitsplatz T3. Zu diesen Informationskanälen gehört jeweils auch ein eigener Signalisierungskanal, der in Figur 6 nicht dargestellt ist.

Die Steuerung ST der Telekommunikationsanlage hat neben einer Verbindung SB zur Steuerung des Koppelfeldes K und der Teilnehmeranschlußleitung TA auch noch mindestens eine weitere Verbindung I, mit der sie auf die Informationskanäle, die im Koppelfeld durchgeschaltet werden, zugreifen kann.

Als innerer Block der Steuerung sind die beiden wechselweise arbeitenden Betriebssysteme RS und TS dargestellt. Zur Kommunikation zwischen Programmen beider Betriebssysteme ist ein Übergabebereich UB zwischen die Betriebssysteme gezeichnet. Das Realzeitbetriebssystem RS behandelt alle Anforderungen, die sich aus der Steuerung einer Telekommunikationsanlage ergeben, also insbesondere den Verbindungsauf- und abbau. Mit dem Time-Sharing-Betriebssystem TS werden allgemeine Datenverarbeitungsprogramme bearbeitet, z.B. Telefonbuch, Gebührenauswertung und Textverarbeitung.

Sollen nun z.B. an der Teilnehmerstation T3 diese allgemeinen Datenverarbeitungsprogramme genutzt werden, so kann sie über das Koppelfeld K mit der Steuerung ST der Anlage verbunden werden. Diese Verbindung ist in Figur 6 gestrichelt dargestellt. Das Realzeitsystem RS erkennt an Hand der eingehenden Informationen, daß ein Programm des Time-Sharing-Betriebssystems TS benötigt wird. Es gibt diese Informationen über den Übergabebereich UB an das Time-Sharing-Betriebssystem weiter. Diese Informationen werden dann vom Time-Sharing-Betriebssystem TS verarbeitet und können z.B. zu einem Zugriff auf eine von ihm verwaltete Platte eines Plattenspeichers führen.

Zusätzlich zu den vermittelten Teilnehmerstationen können noch weitere Teilnehmerstationen direkt mit der Steuerung ST verbunden sein, die ohne die Übergabe durch das Realzeitbetriebssystem RS nur mit dem Time-Sharing-Betriebssystem TS arbeiten. Eine solche Teilnehmerstation ist in Figur 6 mit T5 bezeichnet.

## Patentansprüche

1. Verfahren zur Interruptverarbeitung in einer Datenverarbeitungsanlage
- mit einem Time-Sharing-Betriebssystem mit einer Interruptverarbeitung, in dem zur allgemeinen Datenverarbeitung die Rechenzeit eines Datenprozessors Anwenderprogrammen in vorbestimmten Zeitabschnitten zugeteilt wird, und
- mit einem Realzeitbetriebssystem zum Steuern technischer Prozesse, dessen Realzeitprogramme interruptgesteuert und abhängig von ihrer Priorität abgearbeitet werden,
**dadurch gekennzeichnet, daß**
- jeder Interrupt zentral erfaßt, hinsichtlich seiner Zugehörigkeit zu einem der beiden Betriebssysteme untersucht und in diesem Betriebssystem verarbeitet wird, und daß
- das Realzeitbetriebssystem bei Auftreten eines Realzeit-Interrupts auch bei aktivem Time-Sharing-Betriebssystem aktiviert wird, wozu das Time-Sharing-Betriebssystem unterbrochen wird.

2. Verfahren nach Anspruch 1, dadurch gekennzeichnet, daß ein Realzeitbetriebssystem vorgesehen ist, dessen Realzeitprogramme abhängig von ihrer Priorität abgearbeitet werden, und daß die Priorität des jeweiligen Realzeitprogramms mit der Priorität eines gegebenenfalls laufenden Anwenderprogramms des Time-Sharing-Betriebssystems zentral verglichen wird.

3. Verfahren nach Anspruch 1, dadurch gekennzeichnet, daß ein Time-Sharing-Betriebssystem vorgesehen ist, dessen Anwenderprogramme abhängig von ihrer Priorität abgearbeitet werden, und daß die Priorität des jeweiligen Anwenderprogramms mit der Priorität eines gegebenenfalls laufenden Realzeitprogramms des Realzeitbetriebssystems zentral verglichen wird.

4. Verfahren nach einem der Ansprüche 1 bis 3, dadurch gekennzeichnet, daß bei einem Realzeitbetriebssystem bzw. bei einem Time-Sharing-Betriebssystem, dessen Realzeitprogramme bzw. Anwenderprogramme abhängig von einer Programmpriorität abgearbeitet werden, daß die Priorität des jeweils laufenden Programms zentral festgestellt wird, und daß die Aktivierung des jeweiligen Betriebssystems von der Priorität des jeweils laufenden Programms abhängt.

5. Verfahren nach einem der Ansprüche 1 bis 4, dadurch gekennzeichnet, daß beim Systemanlauf zunächst das Time-Sharing-Betriebssystem und anschließend das Realzeitbetriebssystem geladen wird.

6. Verfahren nach einem der Ansprüche 1 bis 5, dadurch gekennzeichnet, daß bei Auftreten eines Interrupts zu einem die Aktivierung und Unterbrechung der Betriebssysteme steuernden Auswertungsprogramm verzweigt wird, auf dessen Programmadresse eine in einem Speicher abgespeicherte Interrupt-Sprungadresse verweist.

7. Verfahren nach Anspruch 6, dadurch gekennzeichnet, daß die Interrupt-Sprungadresse durch ein Adressenänderungsprogramm, das beim Aktivieren des Betriebsprogramms abgearbeitet wird, veränderbar ist.

8. Verfahren nach Anspruch 7, dadurch gekennzeichnet, daß das Adressenänderungsprogramm als Anwenderprogramm oder als Realzeitprogramm aufgerufen wird.

9. Verfahren nach einem der vorhergehenden Ansprüche, dadurch gekennzeichnet, daß jedem der beiden Betriebssysteme ein anderer Bereich des Arbeitsspeichers des Datenprozessors fest zugeordnet wird.

10. Verfahren nach Anspruch 9, dadurch gekennzeichnet, daß ferner beiden Betriebssystemen ein gemeinsamer Speicherbereich zugeordnet wird.

11. Verfahren nach Anspruch 9 oder 10, dadurch gekennzeichnet, daß die Lage und die Größe der Bereiche im Arbeitsspeicher beim Aktivieren des Betriebsprogramms verändert werden.

12. Verfahren nach einem der vorhergehenden Ansprüche, dadurch gekennzeichnet, daß die Verwaltung eines mit dem Datenprozessor verbundenen Massenspeichers vom Time-Sharing-Betriebssystem übernommen wird.

## Claims

1. Method for interrupt processing in a data processing system
- having a time-sharing operating system with interrupt processing in which the computing time of a data processor is allocated to application programs in predetermined time slots for general data processing, and
- having a real-time operating system for controlling technical processes, the real-time programs of which are processed under interrupt control depending on their priority,
characterised in that
- each interrupt is recorded centrally, examined to determine to which of the two operating systems it pertains, and processed in this operating system, and
- in that, if a real-time interrupt occurs, the real-time operating system is activated even if the time-sharing operating system is active, the time-sharing operating system being interrupted for this purpose.

2. Method according to Claim 1, characterised in that a real-time operating system is provided, the real-time programs of which are processed depending on their priority, and in that the priority of the respective real-time program is compared centrally with the priority of any running application program of the time-sharing operating system.

3. Method according to Claim 1, characterised in that a time-sharing operating system is provided, the application programs of which are processed depending on their priority, and in that the priority of the respective application program is compared centrally with the priority of any running real-time program of the real-time operating system.

4. Method according to one of Claims 1 to 3, characterized in that in a real-time operating system or in a time-sharing operating system, the real-time programs and application programs of which respectively are processed depending on a program priority, the priority of the respective running program is determined centrally, and the activation of the respective operating system depends on the priority of the respective running program.

5. Method according to one of Claims 1 to 4, characterised in that when the system is started up, first the time-sharing operating system and then the real-time operating system is loaded.

6. Method according to one of Claims 1 to 5, characterised in that when an interrupt occurs, a branch is made to an evaluation program which controls the activation and interruption of the operating systems, an interrupt branch address stored in a memory pointing to the program address of said evaluation program.

7. Method according to Claim 6, characterised in that the interrupt branch address can be modified by an address modification program which is processed when the operating program is activated.

8. Method according to Claim 7, characterised in that the address modification program is invoked as an application program or as a real-time program.

9. Method according to one of the preceding claims, characterised in that a different area of the main memory of the data processor is permanently assigned to each of the two operating systems.

10. Method according to Claim 9, characterised in that a common memory area is furthermore assigned to both operating systems.

11. Method according to Claim 9 or 10, characterised in that the location and the size of the areas in the main memory are modified when the operating program is activated.

12. Method according to one of the preceding claims, characterised in that the time-sharing operating system handles the management of a mass storage means connected to the data processor.

## Revendications

1. Procédé de traitement à interruptions dans une installation de traitement de données, comportant
- un système de fonctionnement à partage du temps comportant une unité de traitement à interruptions et dans lequel pour le traitement général des données, le temps de calcul d'un processeur de données est affecté à des programmes d'utilisation pendant des intervalles de temps prédéterminés, et
- un système de fonctionnement en temps réel pour commander des processus techniques, dont les programmes en temps réel sont traités d'une manière commandée par les interruptions et en fonction de leur priorité,
caractérisé par le fait que
- chaque interruption est détectée d'une manière centrale, est étudiée en ce qui concerne son appartenance à l'un des deux systèmes de fonctionnement et est traitée dans ce système de fonctionnement, et que
- lors de l'apparition d'une interruption en temps réel, le système de fonctionnement en temps réel est activé, même dans le cas où le système de fonctionnement à partage du temps est actif, le système de fonctionnement à partage du temps étant interrompu à cet effet.

2. Procédé suivant la revendication 1, caractérisé par le fait qu'il est prévu un système de fonctionnement en temps réel, dont les programmes en temps réel sont traités en fonction de leur priorité, et que la priorité du programme respectif en temps réel est comparée, d'une manière centrale, à la priorité d'un programme d'utilisation, éventuellement en cours, du système de fonctionnement à partage du temps.

3. Procédé suivant la revendication 1, caractérisé par le fait qu'il est prévu un système de fonctionnement à partage du temps, dont les programmes d'utilisation sont traités en fonction de leur priorité et que la priorité du programme d'utilisation respectif est comparée d'une manière centrale à la priorité d'un programme en temps réel, éventuellement en cours d'exécution, du système de fonctionnement en temps réel.

4. Procédé suivant l'une des revendications 1 à 3, caractérisé par le fait que dans le cas d'un système de fonctionnement en temps réel ou d'un système de fonctionnement à partage du temps, dont les programmes en temps réel ou les programmes d'utilisation sont traités en fonction d'une priorité du programme, la priorité du programme respectivement en cours est établie d'une manière centrale et que l'activation du système respectif de fonctionnement dépend de la priorité du programme respectivement en cours.

5. Procédé suivant l'une des revendications 1 à 4, caractérisé en ce qu'au démarrage du système, tout d'abord le système de fonctionnement en temps partagé est chargé, puis le système de fonctionnement en temps réel.

6. Procédé suivant l'une des revendications 1 à 5, caractérisé par le fait que lors de l'apparition d'une interruption, un branchement est établi sur un programme d'évaluation qui commande l'activation et l'interruption des systèmes de fonctionnement et dont l'adresse est signalée par une adresse de saut d'interruption mémorisée dans une mémoire.

7. Procédé suivant la revendication 6, caractérisé par le fait que l'adresse de saut d'interruption peut être modifiée par un programme de modification d'adresses, qui est traité lors de l'activation du programme de fonctionnement.

8. Procédé suivant la revendication 7, caractérisé par le fait que le programme de modification d'adresses est appelé en tant que programme d'utilisation ou en tant que programme en temps réel.

9. Procédé suivant l'une des revendications précédentes, caractérisé par le fait qu'à chacun des deux systèmes de fonctionnement est associée de façon fixe une autre zone de la mémoire de travail du processeur de données.

10. Procédé suivant la revendication 9, caractérisé par le fait qu'une zone commune de mémoire est associée en outre aux deux systèmes de fonctionnement.

11. Procédé suivant la revendication 9 ou 10, caractérisé par le fait que la position et la taille des zones dans la mémoire de travail sont modifiées lors de l'activation du programme de fonctionnement.

12. Procédé suivant l'une des revendications précédentes, caractérisé par le fait que la gestion d'une mémoire de masse raccordée au processeur de données est prise en charge par le système de fonctionnement en temps partagé.
